# DEMANDE DE BREVET EUROPEEN

(11) **EP 4 302 658 A1**
(43) Date de publication de la demande: **10.01.2024**
(21) Numéro de dépôt: 23183532.3
(22) Date de dépôt: 05.07.2023
(51) Int. Cl.: A47J 31/34, A47J 31/60

(54) **PROCEDE DE NETTOYAGE OPTIMISE D'UNE CHAMBRE D'INFUSION D'UNE MACHINE A CAFE**

(30) Priorité: 08.07.2022 FR 2207051
(71) Demandeur: SEB S.A., 69130 Ecully (FR)
(72) Inventeur: FERRON, François, 69134 Ecully Cedex (FR); LE GOUEFF, Ronan, 69134 Ecully Cedex (FR); GOUBAUD, Thierry, 69134 Ecully Cedex (FR); ETIENNE, Frederic, 69134 Ecully Cedex (FR)
(74) Mandataire: SEB Développement

(57) **Abrégé**

L'invention concerne un procédé de nettoyage d'une chambre d'infusion (12) d'une machine à café automatique comportant un dispositif d'infusion (10) qui comprend la chambre d'infusion (12) et un conduit (26) d'alimentation en eau de la chambre d'infusion (12), le dispositif d'infusion (12) comportant une vanne (30) de répartition des fluides comprenant au moins une position d'alimentation en eau de la chambre d'infusion (12) et une position de vidange de la chambre d'infusion (12), le procédé comportant au moins les étapes :
b) piloter la vanne (30) de répartition des fluides dans la position d'alimentation en eau de chambre d'infusion (12)
c) injecter un volume d'eau V1 par le conduit (26) d'alimentation en eau dans la chambre d'infusion (12),

Conformément à l'invention, ledit procédé comporte après l'étape c), une étape d) consistant à :
d) piloter la vanne (30) de répartition des fluides dans la position de vidange de la chambre d'infusion (12).

## Description

### Domaine technique

La présente invention concerne un procédé de nettoyage d'une chambre d'infusion d'une machine à café automatique.

### Etat de la technique

Le demanderesse commercialise notamment une machine à café automatique sous la marque KRUPS^{®} référence YY4046FD. Cette machine à café comporte un circuit de commande et un dispositif d'infusion qui comprend une chambre d'infusion. La chambre d'infusion est munie d'une ouverture supérieure destinée à recevoir de la mouture de café. Le dispositif d'infusion comporte un piston presseur mobile entre une position haute de retrait dans laquelle la mouture peut être introduite dans la chambre d'infusion et une position basse de tassage dans laquelle le piston presseur est agencé dans la chambre d'infusion pour tasser la mouture et former une galette de mouture après l'infusion. Le groupe d'infusion comporte une chaudière qui est agencée sous la chambre d'infusion et qui comprend un élément chauffant et un conduit d'alimentation en eau de la chambre d'infusion. Le dispositif d'infusion comporte une vanne de répartition des fluides comprenant au moins une position d'alimentation en eau de la chambre d'infusion et une position de vidange de la chambre d'infusion. Il est connu de cette machine à café un procédé de nettoyage de la chambre d'infusion comportant au moins les étapes:
b) piloter la vanne de répartition des fluides dans la position d'alimentation en eau de la chambre d'infusion
c) injecter un volume d'eau V1 par le conduit d'alimentation en eau dans la chambre d'infusion,
e) alimenter électriquement l'élément chauffant de la chaudière pour chauffer la chambre d'infusion pour évaporer l'eau résiduelle présente dans la chambre d'infusion.

Un tel procédé de nettoyage donne satisfaction en termes de propreté de la chambre d'infusion.

Cependant, la durée d'un cycle de nettoyage est relativement longue, notamment la durée de l'étape e) consistant à évaporer l'eau résiduelle présente dans la chambre d'infusion.

De plus, l'alimentation électrique de la chaudière pendant l'étape e) consistant à évaporer l'eau résiduelle présente dans la chambre d'infusion est consommatrice d'énergie électrique.

### Résumé de l'invention

Le but de la présente invention est de remédier aux inconvénients précités et de proposer un procédé de nettoyage d'une chambre d'infusion d'une machine à café automatique qui est économique et rapide à mettre en oeuvre.

Ces buts sont atteints avec un procédé de nettoyage d'une chambre d'infusion d'une machine à café automatique comportant un circuit de commande et un dispositif d'infusion qui comprend la chambre d'infusion, ladite chambre d'infusion étant munie d'une ouverture supérieure destinée à recevoir de la mouture de café, ledit dispositif d'infusion comportant un piston presseur mobile entre une position haute de retrait dans laquelle la mouture peut être introduite dans ladite chambre d'infusion et une position basse de tassage dans laquelle le piston presseur est agencé dans la chambre d'infusion pour tasser la mouture et former une galette de mouture après l'infusion, ledit groupe d'infusion comportant une chaudière qui est agencée sous la chambre d'infusion et qui comprend un élément chauffant et un conduit d'alimentation en eau de la chambre d'infusion, le dispositif d'infusion comportant une vanne de répartition des fluides comprenant au moins une position d'alimentation en eau de la chambre d'infusion et une position de vidange de la chambre d'infusion, le procédé comportant au moins les étapes :
b) piloter la vanne de répartition des fluides dans la position d'alimentation en eau de chambre d'infusion
c) injecter un volume d'eau V1 par le conduit d'alimentation en eau dans la chambre d'infusion,
ledit procédé étant caractérisé en ce qu'il comporte après l'étape c), une étape d) consistant à :
d) piloter la vanne de répartition des fluides dans la position de vidange de la chambre d'infusion.

Ainsi, dans un tel procédé, l'eau résiduelle dans la chambre d'infusion est évacuée quasiment sans consommer d'énergie et très rapidement.

Par une vanne de répartition des fluides comprend une position de vidange de la chambre d'infusion, on comprend que la chambre d'infusion est reliée fluidiquement à la vanne de répartition des fluides qui est elle-même reliée fluidiquement à un dispositif de récupération/évacuation des fluides, le circuit de commande pilotant la vanne de répartition des fluides dans la position de vidange pour relier fluidiquement la chambre d'infusion au dispositif de récupération/évacuation des fluides.

Avantageusement, la chambre d'infusion présente lorsqu'elle est fermée un volume V2f, le rapport V1/V2f étant supérieur à 1 et le procédé comporte avant l'étape b) une étape a):
a) amener le piston presseur en position basse de tassage sans avoir introduit de mouture dans la chambre d'infusion,
et entre l'étape c) et l'étape d) une étape c1) :
   c1) amener le piston presseur en position haute de retrait.

Le volume V2f de la chambre d'infusion est défini lorsque le piston presseur est dans sa position de tassage la plus basse.

Ainsi, à l'étape c), une quantité d'eau importante est injectée pour garantir un bon nettoyage. Une fois la chambre d'infusion remplie, l'eau s'écoule par un conduit de distribution du café qui traverse le piston presseur.

De préférence, le circuit de commande comporte un organe de commande et le procédé de nettoyage est lancé après une action sur l'organe de commande.

Ainsi, le circuit de commande lance le procédé de nettoyage après une action manuelle sur l'organe de commande.

Avantageusement, l'organe de commande est un organe de commande de l'arrêt de la machine.

Ainsi, le circuit de commande lance le procédé de nettoyage après une action manuelle sur l'organe de commande de l'arrêt de la machine puis, lorsque le procédé de nettoyage est terminé, arrête la machine.

De préférence, l'organe de commande est un organe de commande uniquement dédié au lancement du procédé de nettoyage.

Avantageusement, la machine à café automatique est configurée pour réaliser au moins une recette de café court présentant un volume en tasse de moins de 3 centilitres, le procédé de nettoyage de la chambre d'infusion étant lancé automatiquement après la réalisation de la recette de café court.

La réalisation d'une recette de café court encrasse la chambre d'infusion de manière importante. Une telle disposition permet de conserver une chambre d'infusion propre sans intervention de l'utilisateur.

De préférence, la chambre d'infusion présente, lorsqu'elle est ouverte, un volume V2o et le rapport V1/V2o est supérieur à 0,8.

Ainsi, le procédé de nettoyage met en oeuvre peu d'eau pour un nettoyage moins poussé mais plus rapide.

Avantageusement, la machine à café automatique comporte un bac de récupération des fluides, l'eau résiduelle présente dans la chambre après l'étape d) étant dirigée dans le bac de récupération.

Ainsi, tous les fluides usagés, notamment l'eau résiduelle issue du procédé de nettoyage sont collectées dans un même bac de récupération que l'utilisateur peut vider de manière cyclique.

De préférence, la chambre d'infusion est agencée au-dessus de la chaudière et après l'étape d), l'eau résiduelle dans la chambre d'infusion s'évacue par gravité.

Ainsi, avec un tel procédé, l'eau résiduelle dans la chambre d'infusion est évacuée sans consommer d'énergie.

Avantageusement, le groupe d'infusion comporte un dispositif d'expulsion de la galette de mouture en fin de cycle de préparation d'une boisson infusée, le dispositif d'expulsion comportant un plateau perforé mobile à l'intérieur de la chambre d'infusion entre une position basse de travail dans laquelle il repose sur un fond de la chambre d'infusion et une position haute d'expulsion dans laquelle il est agencé au niveau de l'ouverture supérieure de la chambre d'infusion.

Ainsi, pendant l'étape c) du procédé de nettoyage, l'eau injectée dans la chambre d'infusion nettoie le plateau perforé.

Le plateau perforé est susceptible de s'encrasser car pour réaliser une boisson infusée, il reçoit de la mouture et il est chauffé par la chaudière.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig 1] La figure 1 est une vue en perspective d'une machine à café automatique selon un mode particulier de réalisation de l'invention.
[Fig 2] La figure 2 est une vue en perspective du dispositif d'infusion de la machine à café automatique de la figure 1.
[Fig 3] La figure 3 est une vue en coupe partielle suivant le plan de coupe vertical suivant la ligne III-III du dispositif d'infusion de la machine à café automatique de la figure 1, le piston presseur étant en position basse de tassage.
[Fig 4] La figure 4 est une vue en coupe partielle suivant le plan de coupe vertical suivant la ligne III-III du dispositif d'infusion de la machine à café automatique de la figure 1, le piston presseur étant en position haute de retrait.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "haut", "bas", "avant", "arrière", "longitudinal", "transversal", employés pour décrire la machine à café automatique font référence à cette machine reposant sur un plan de travail, en situation d'usage.

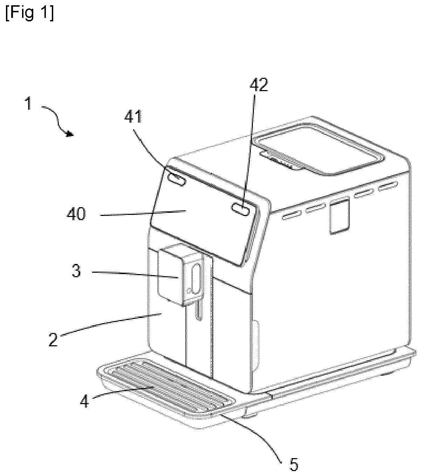

Dans l'exemple de réalisation représenté aux figures 1 à 4, une machine à café automatique 1 comporte un réservoir 2 formant une alimentation en eau froide, un groupe d'infusion 10 muni d'une chambre d'infusion 12 alimentée en mouture de café par un broyeur à grains (non représenté sur les figures). La machine à café automatique 1 comporte également une tête de distribution 3 du café. La tête de distribution 3 est agencée au-dessus d'un repose-tasse 4 et elle est montée mobile en translation verticale pour permettre à un utilisateur d'ajuster la position de la sortie de café à la hauteur de la tasse. La machine à café automatique 1 comporte un bac 5 de récupération des fluides agencé en partie sous le repose tasse 4.

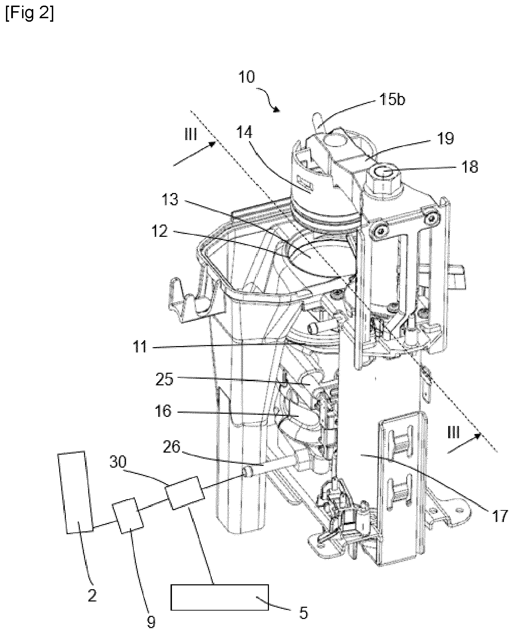

Tel que visible aux figures 2 à 4, le groupe d'infusion 10 comprend un corps 11 s'étendant longitudinalement selon un axe vertical et renfermant la chambre d'infusion 12 munie d'une ouverture supérieure 13. La chambre d'infusion 12 est susceptible de recevoir un piston presseur 14 monté déplaçable selon un axe vertical au moyen d'un mécanisme d'entraînement. Le groupe d'infusion 10 comporte également une pompe électrique 9 (représentée de manière schématique sur la figure 2), destinée à créer une circulation d'eau et d'infusion, ainsi qu'une chaudière 16 destinée à chauffer l'eau pour la préparation du café dans la chambre d'infusion 12. Le corps 11 est agencé latéralement à un vérin hydraulique 17 à simple effet comportant une tige supérieure 18 portant un bras 19 formant potence et dont l'extrémité libre est reliée au piston presseur 14, les courses du piston presseur 14 et du vérin hydraulique 17 étant ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 13. Dans la position basse de tassage, le piston presseur 14 comprime la mouture de café admise dans la chambre d'infusion 12 pour former une galette de mouture comprimée.

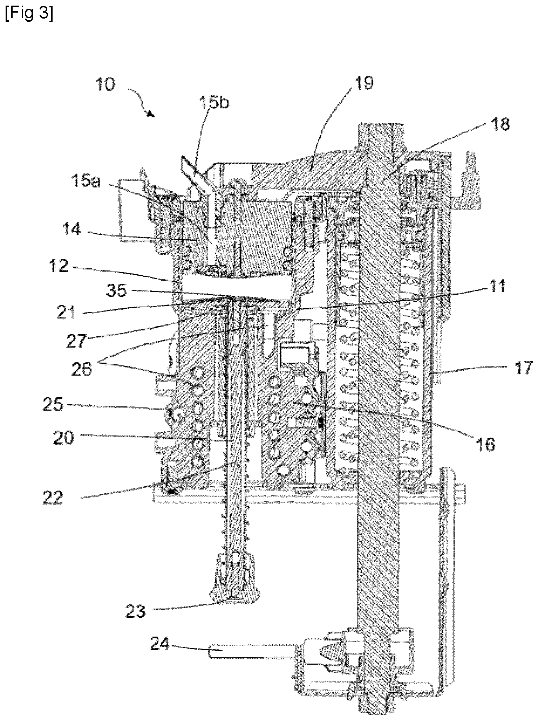

La chaudière 16 et le corps 11 sont formés en une seule pièce de matériau conducteur de la chaleur qui contient une résistance électrique 25 chauffante et un conduit 26 d'alimentation en eau de la chambre d'infusion 12 dont l'entrée est reliée, via la pompe électrique 9 au réservoir 2 d'eau froide et dont l'extrémité débouche sur un fond 27 de la chambre d'infusion 12. Le piston presseur 14 présente un conduit de passage 15a (Figures 2 et 3) de l'infusion débouchant par un orifice de sortie 15b, tandis que la pompe électrique 9 est adaptée à créer une circulation d'eau ascendante dans la chambre d'infusion 12 vers l'orifice de sortie 15b lorsque le piston presseur 14 ferme la chambre d'infusion 12. Un tel groupe d'infusion 10 a, par exemple, été décrit plus en détail dans la demande de brevet PCTWO99/12456.

L'orifice de sortie 15b du conduit de passage 15a de l'infusion du piston presseur 14 est relié à un conduit agencé dans la tête de distribution 3 par un tuyau souple (non représenté sur les figures) pour former une sortie de café.

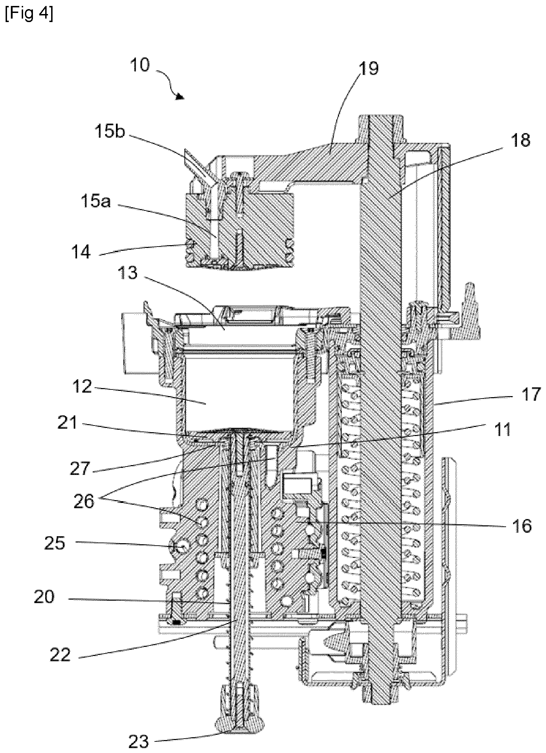

Le groupe d'infusion 10 comporte un dispositif d'expulsion 20 de la galette de mouture en fin de cycle de préparation d'une boisson infusée. Le dispositif d'expulsion 20 comporte un plateau 21 perforé mobile à l'intérieur de la chambre d'infusion 12 entre une position basse de travail dans laquelle il repose sur le fond 27 de la chambre d'infusion 12 et une position haute d'expulsion dans laquelle il est agencé au niveau de l'ouverture supérieure 13 de la chambre d'infusion 12. Le dispositif d'expulsion 20 comporte une tige d'éjection 22 qui est relié au plateau 21 perforé mobile et qui traverse la chaudière 16. Le dispositif d'expulsion 20 comporte une pièce de transmission 24 mise en mouvement par le vérin hydraulique 17 qui agit sur une extrémité basse 23 de la tige d'éjection 22. Ainsi, le mouvement du plateau 21 perforé est assujetti au mouvement du vérin hydraulique 17. Le plateau 21 perforé comporte une grille 35 (Figure 4) destinée à supporter la mouture de café tout en permettant le passage de l'eau injecté par le conduit 26 dans le fond de la chambre d'infusion 12 lors de la réalisation d'une boisson infusée.

Tel que visible de manière schématique à la figure 2, la pompe 9 électrique comprend une entrée reliée au réservoir 2 qui est destiné à recevoir de l'eau froide. La pompe 9 électrique comporte une sortie reliée à une vanne 30 de répartition des fluides. La vanne 30 de répartition des fluides est reliée au conduit 26 d'alimentation en eau de la chambre d'infusion et également au bac 5 de récupération des fluides. La vanne 30 comprend une position d'alimentation en eau de la chambre d'infusion dans laquelle la pompe 9 électrique est reliée fluidiquement à la chambre d'infusion. La vanne 30 comprend une position de vidange de la chambre d'infusion 12 dans laquelle la chambre d'infusion 12 est reliée fluidiquement au bac 5 de récupération des fluides.

La machine à café automatique 1 comporte un circuit de commande 40 pour gérer la réalisation d'une boisson à partir des instructions données par un utilisateur.

Un procédé de nettoyage de chambre d'infusion 12 est mis en oeuvre dans la machine à café automatique 1.

Dans un premier mode de réalisation, le procédé de nettoyage de la chambre d'infusion 12 comporte les étapes :
a) amener le piston presseur 14 en position basse de tassage sans avoir introduit de mouture dans la chambre d'infusion 12,
b) piloter la vanne 30 de répartition des fluides dans la position d'alimentation en eau de la chambre d'infusion 12,
c) injecter un volume d'eau V1 égal à 70 cm3 par le conduit 26 d'alimentation en eau dans la chambre d'infusion 12 qui présente, lorsqu'elle est fermée, un volume V2f égal à 25 cm3,
c1) amener le piston presseur 14 en position haute de retrait
d) piloter la vanne 30 de répartition des fluides dans la position de vidange de la chambre d'infusion 12, l'eau résiduelle présente dans la chambre d'infusion 12 s'écoulant par gravité dans le bac 5 de récupération.

Le circuit de commande 40 comporte notamment un organe de commande 41 (Figure 1) permettant à l'utilisateur de lancer un cycle de nettoyage de la chambre d'infusion 12 en mettant en oeuvre le procédé de nettoyage. L'organe de commande 41 peut être formé notamment par une touche capacitive. L'organe de commande (41) est uniquement dédié au lancement du procédé de nettoyage.

Dans une première variante, le circuit de commande 40 comporte un organe de commande 42 de l'arrêt de la machine. Un appui sur l'organe de commande 42 lance un cycle de nettoyage avant d'arrêter la machine à café automatique 1.

Dans une deuxième variante, la machine à café automatique 1 est configurée pour réaliser au moins une recette de café court présentant un volume en tasse de moins de 3 centilitres, le procédé de nettoyage de la chambre d'infusion 12 étant lancé automatiquement par le circuit de commande 40 après la réalisation de la recette de café court.

Dans un deuxième mode de réalisation, le procédé de nettoyage de la chambre d'infusion 12 comporte les étapes :
b) piloter la vanne 30 de répartition des fluides dans la position d'alimentation en eau de chambre d'infusion 12,
c) injecter un volume d'eau V1 égal à 25 cm3 par le conduit 26 d'alimentation en eau dans la chambre d'infusion 12 qui présente un volume V2o lorsqu'elle est ouverte, égal à 80 cm3, le rapport V1/V2o étant égal à 0,31.
d) piloter la vanne 30 de répartition des fluides dans la position de vidange de la chambre d'infusion 12, l'eau résiduelle présente dans la chambre d'infusion 12 s'écoulant par gravité dans le bac 5 de récupération.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, la machine à café automatique est raccordée à un circuit d'eau usée domestique et l'eau résiduelle présente dans la chambre d'infusion s'écoule par gravité dans le circuit d'eau usée.

## Revendications

1. Procédé de nettoyage d'une chambre d'infusion (12) d'une machine à café automatique (1) comportant un circuit de commande (40) et un dispositif d'infusion (10) qui comprend la chambre d'infusion (12), ladite chambre d'infusion (12) étant munie d'une ouverture supérieure (13) destinée à recevoir de la mouture de café, ledit dispositif d'infusion (10) comportant un piston presseur (14) mobile entre une position haute de retrait dans laquelle la mouture peut être introduite dans ladite chambre d'infusion (12) et une position basse de tassage dans laquelle le piston presseur (14) est agencé dans la chambre d'infusion (12) pour tasser la mouture et former une galette de mouture après l'infusion, ledit groupe d'infusion (10) comportant une chaudière (16) qui est agencée sous la chambre d'infusion (12) et qui comprend une résistance électrique (25) chauffante et un conduit (26) d'alimentation en eau de la chambre d'infusion (12), le dispositif d'infusion (12) comportant une vanne (30) de répartition des fluides comprenant au moins une position d'alimentation en eau de la chambre d'infusion (12) et une position de vidange de la chambre d'infusion (12), le procédé comportant au moins les étapes :
b) piloter la vanne (30) de répartition des fluides dans la position d'alimentation en eau de la chambre d'infusion (12)
c) injecter un volume d'eau V1 par le conduit (26) d'alimentation en eau dans la chambre d'infusion (12),
ledit procédé étant **caractérisé en ce qu'**il comporte après l'étape c), une étape d) consistant à :
d) piloter la vanne (30) de répartition des fluides dans la position de vidange de la chambre d'infusion (12).

2. Procédé de nettoyage d'une chambre d'infusion (12) d'une machine à café automatique (1) selon la revendication 1, **caractérisé en ce que** la chambre d'infusion (12) présente, lorsqu'elle est fermée, un volume V2f, le rapport V1/V2f étant supérieur à 1 et **en ce que** le procédé comporte avant l'étape b) une étape a):
a) amener le piston presseur (14) en position basse de tassage sans avoir introduit de mouture dans la chambre d'infusion,
et entre l'étape c) et l'étape d) une étape c1) :
c1) amener le piston presseur (14) en position haute de retrait

3. Procédé de nettoyage d'une chambre d'infusion (12) d'une machine à café automatique (1) selon l'une quelconque des revendications 1 à 2, **caractérisé en ce que** le circuit de commande (40) comporte un organe de commande (41, 42) et **en ce que** le procédé de nettoyage est lancé après une action sur l'organe de commande (41, 42).

4. Procédé de nettoyage d'une chambre d'infusion (12) d'une machine à café automatique (1) selon la revendication 3, **caractérisé en ce que** l'organe de commande est un organe de commande (42) de l'arrêt de la machine.

5. Procédé de nettoyage d'une chambre d'infusion (12) d'une machine à café automatique (1) selon la revendication 3, **caractérisé en ce que** l'organe de commande est un organe de commande (41) uniquement dédié au lancement du procédé de nettoyage.

6. Procédé de nettoyage d'une chambre d'infusion (12) d'une machine à café automatique (1) selon l'une quelconque des revendications 1 à 3, **caractérisé en ce que** la machine à café automatique (1) est configurée pour réaliser au moins une recette de café court présentant un volume en tasse de moins de 3 centilitres, le procédé de nettoyage de la chambre d'infusion (12) étant lancé automatiquement après la réalisation de la recette de café court.

7. Procédé de nettoyage d'une chambre d'infusion (12) d'une machine à café automatique (1) selon la revendication 1, **caractérisé en ce que** la chambre d'infusion (12) présente, lorsqu'elle est ouverte, un volume V2o et **en ce que** le rapport V1/V2o est supérieur à 0,8.

8. Procédé de nettoyage d'une chambre d'infusion (12) d'une machine à café automatique (1) selon l'une quelconque des revendications 1 à 7, **caractérisé en ce que** la machine à café automatique (1) comporte un bac (5) de récupération des fluides, l'eau résiduelle présente dans la chambre après l'étape d) étant dirigée dans le bac (5) de récupération.

9. Procédé de nettoyage d'une chambre d'infusion (12) d'une machine à café automatique (1) selon l'une quelconque des revendications 1 à 8, **caractérisé en ce que** la chambre d'infusion (12) est agencée au-dessus de la chaudière (16) et **en ce qu'**après l'étape d), l'eau résiduelle dans la chambre d'infusion (12) s'évacue par gravité.

10. Procédé de nettoyage d'une chambre d'infusion (12) d'une machine à café automatique (1) selon l'une quelconque des revendications 1 à 9, **caractérisé en ce que** le groupe d'infusion (10) comporte un dispositif d'expulsion (20) de la galette de mouture en fin de cycle de préparation d'une boisson infusée, le dispositif d'expulsion (20) comportant un plateau (21) perforé mobile à l'intérieur de la chambre d'infusion (12) entre une position basse de travail dans laquelle il repose sur un fond (27) de la chambre d'infusion (12) et une position haute d'expulsion dans laquelle il est agencé au niveau de l'ouverture supérieure (13) de la chambre d'infusion (12).
